Europäisches Patentamt

(19) European Patent Office

Office européen des brevets

(11) Publication number: **0 036 184**
**A2**

(12) **EUROPEAN PATENT APPLICATION**

(21) Application number: **81101835.7**

(51) Int. Cl.³: **B 29 D 23/08**
**B 29 J 1/00, F 16 L 9/14**

(22) Date of filing: **12.03.81**

(30) Priority: **17.03.80 US 130823**

(43) Date of publication of application:
**23.09.81 Bulletin 81/38**

(84) Designated Contracting States:
**BE CH DE FR GB IT LI NL SE**

(71) Applicant: **Armco Inc.**
**703 Curtis Street**
**Middletown Ohio 45043(US)**

(72) Inventor: **Cook, John L.**
**10041 Glenbrook**
**Riverside California, 92503(US)**

(72) Inventor: **Hamilton, Alan D.**
**1286 Appletree Lane**
**Aurora Illinois 60506(US)**

(72) Inventor: **Peterson, Greogory P.**
**1407 East Elm Street**
**Wheaton Illinois 60187(US)**

(74) Representative: **Lederer, Franz, Dr. et al,**
**Patentanwälte Dr. Franz Lederer Dipl.-Ing. Reiner F.**
**Meyer-Roxlau Lucile-Grahn-Strasse 22**
**D-8000 München 80(DE)**

(54) Pipe building method and apparatus.

(57) Method and apparatus for producing a tube containing sand particles bonded by a thermosetting resin. Examples of such resin include unsaturated polyesters and epoxy resins. Further, the sand core can be bonded by reinforcing material on the inner and outer surfaces of the sand core. The products are useful in situations where liquid or gaseous corrosive or abrasive materials are conveyed. Additional utility will be found in the sewer and water distribution markets.

-FIG. 1

COMPLETE DOCUMENT

Croydon Printing Company Ltd.

PIPE BUILDING METHOD AND APPARATUS

This invention relates to the production of tubes containing resin bonded sand and, optionally, fibrous high-strength reinforcement as inner and outer layers, the latter frequently being referred to in the art as sandwich pipe.

Sandwich pipe has been available for many years. An early example thereof is shown in US-P 3,406,724 (1968). Example 3 of this patent discloses the production of a pipe on a mandrel. Continuous glass fibers (roving) impregnated with an epoxy resin were wound upon a mandrel in a cross-wise direction to produce a pipe of high strength. After this initial layer, a mixture of polyurethane resin and chalk powder was introduced followed by an outer layer produced the same way as the inner layer. No details of the method of application of the combination of chalk powder and resin is given.

Another example of a reinforced plastic mortar pipe is US-P 3,483,896 (1969) where a glass roving is wound around a mandrel alternating with applications of sand until a complete structure is made. Many systems are available for supplying the resin impregnated glass roving to the mandrel.

Finally, attention is drawn to US-P 4,080,999 (1978) wherein a sandwich tube comprising an inner and outer fiber reinforced layer of thermosetting resin and an intermediate layer therebetween consisting of inorganic filler material coated with thermosetting resin is disclosed. The intermediate layer is produced by establishing a resin spray and dropping sand into the resin spray at certain critical temperatures whereby the resin particles are coated and conveyed to the mandrel. If carefully controlled, this can produce an excellent pipe, but control of the thickness of the filler material and the resin is extremely difficult.

An object of this invention is to provide a new method for producing a tube containing an inorganic filler of solid particles bonded by a thermosetting resin. A further object of this invention is to provide a pipe containing fibrous reinforcing inner and outer layers containing an intermediate inorganic filler material bonded by a thermosetting resin.

A further object of this invention is to provide apparatus for carrying out this invention.

Other objects and advantages of the present invention will be apparent to one skilled in the art upon reading this disclosure.

Broadly, our invention resides in a method for producing a tube containing sand particles bonded by a thermosetting resin comprising rotating a mandrel, spraying progressively along the length of the mandrel from the first to the second end a band of resin onto said mandrel, dropping sand on said band of resin at a point spaced from the point of application of the band of resin, reversing relative movement between (1) said mandrel and (2) said resin band and sand application so as to apply resin and sand progressively from the second to the first end of the mandrel, and continuing said spraying and dropping until a predetermined thickness of sand and resin is obtained.

In a more specific aspect, the invention resides in a method for producing a tube containing sand particles bonded by unsaturated polyester or epoxy resin comprising rotating a mandrel adapted to traverse a fixed location while said mandrel is rotating and traversing, spraying a band of resin onto said mandrel from said fixed location, dropping sand onto the mandrel covering the band of said sprayed resin, said spraying taking place at a location around said mandrel other than the location where said sand is dropped and being contiguous to the adjacent band of sprayed resin, and continuing said spraying and dropping until a predetermined thickness of sand and resin is obtained.

In another aspect, the invention resides in an apparatus for building a sand/resin tubular wall structure comprising a rotatable mandrel, means to rotate said mandrel, means to drop sand on a selected portion of the top portion of said mandrel, means to apply a band of liquid to said mandrel at a location spaced from but in constant relative position to said means to drop sand, and means to provide relative longitudinal traverse of (1) said mandrel and (2) the combination of said means to drop sand and said means to apply a band of liquid.

While we have referred particularly to sand, it will be obvious that other particulate materials can be used such as particulate silica, vermiculite, carbon, etc.

Accompanying and forming a part of this disclosure is a drawing comprising:

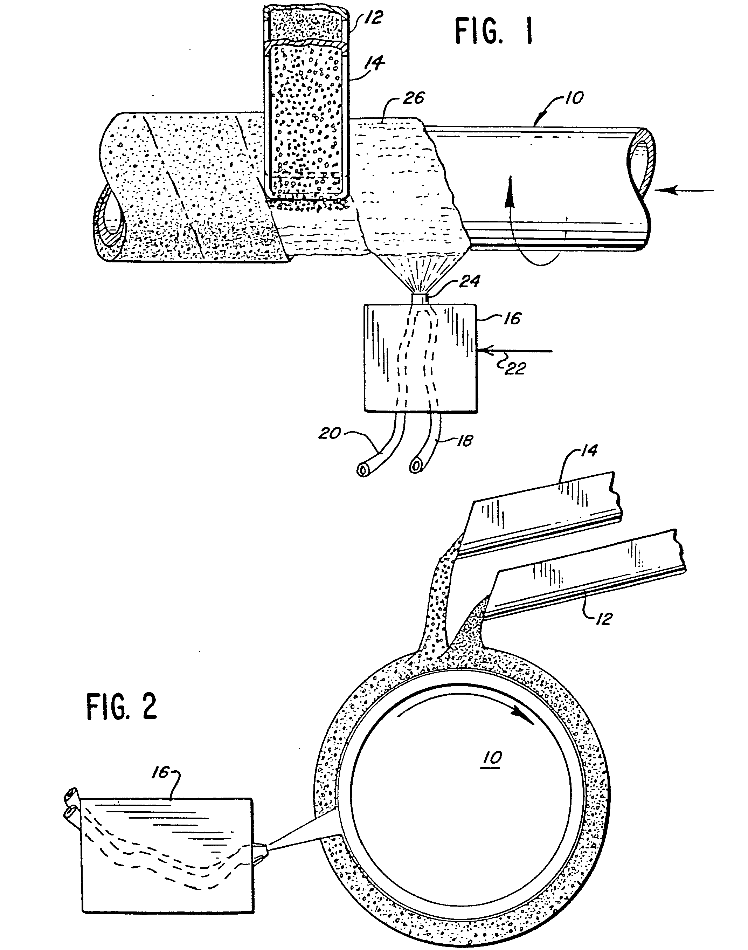

Figure 1. A schematic side view of apparatus for carrying out the preferred method of our invention; and

Figure 2. An enlarged endwise view of the system shown in Figure 1.

Directing attention to the drawing, the apparatus of the invention comprises, basically, a mandrel 10 which is adapted to rotate at the desired speed and to traverse from left to right and right to left. Above the approximate top dead center point of the mandrel are provided sand supply means 12 and 14. Typically, vibratory feeders are used. Positioned adjacent to the mandrel is resin supply means 16 to which, in the preferred embodiment, two resin supply mixtures are supplied through tubes 18 and 20. Control air to supply motive force to pump 16 is shown as control air conduit 22. Extending from the nozzle 24 of pump 16 is a spray of the resin which forms a band 26 upon mandrel 10. After this band is supplied, rotation and transverse movement of the mandrel brings this band of fresh resin under the particulate material supply means 12 and 14 and sand is supplied to the resin. Typically, medium and coarse sand are used in order to obtain a more dense structure. This step continues to the end of the mandrel. At the end of the mandrel, the resin spray is terminated and a full sand pass is made. Thereafter, the relative positions of the spray nozzle and the sand supply means are reversed for spraying a band of resin onto the mandrel, and then this is followed by application of the sand. The above operations are continued until the particulate material/sand mixture has been built up to the desired level or thickness.

Obviously, the arrangement can be varied so that the sand and resin supply means traverse a mandrel which rotates in a fixed position. We have produced pipe with both systems.

A number of thermosetting resins have been used for the production of tubes and these will all be suitable in our invention. Examples include unsaturated polyester, epoxy, phenolic, furan, urea formaldehyde resins, etc. Our preferred system uses unsaturated polyester with a particular method of curing so that the pipe or tube can be most economically produced.

In any event, the resin should be a rapidly curing one so that pipe can be rapidly made. As a general rule, the resin layer should begin to cure at least by the time that the second following one is applied. Stated conversely, as the third layer of particulate material and sand is applied, the second preceding layer should have started to cure. If this arrangement is not followed, there will be some fluid flow in the tube wall being prepared which interferes with good tube production.

Even working with unsaturated polyester, various alternatives are available. One system utilized to obtain rapid curing of unsaturated polyester resin is to incorporate the initiator in a first portion of the resin and the accelerator in a second portion and to mix these portions immediately prior to utilization. This process is satisfactory provided intimate mixing is obtained. An alternative is to use a system wherein the curing system for any particular resin is added immediately prior to use. This can produce satisfactory results, but requires careful mixing in that an extremely small amount of catalyst is used compared to the total quantity of resin.

Stated in broad terms, one preferred thermosetting resin system for producing the cured article from a mixture of polyester resin and an unsaturated cross-linking monomer comprises preparing Components A and B containing said mixture, adding an initiator to each of said components, adding an accelerator to each of said components, the accelerator in Component A being relatively inactive with the initiator in said component, but relatively active with the initiator in Component B, and the accelerator in Component B being relatively inactive with the initiator in said Component B, but relatively active with the initiator in Component A. The initiator and accelerator combinations are selected so that each of the Components A and B have a long pot life, but which cure rapidly when mixed. Should there be inadequate mixing, both components contain sufficient accelerator and initiator to produce a good cure upon final heating.

The unsaturated polyesters are the reaction product of one or more polycarboxylic acids and one or more polyhydric alcohols. One or more of the components of the polyester must be ethylenically unsaturated. Typical unsaturated polycarboxylic acids include dicarboxylic acids such as fumaric acid, maleic acid, maleic anhydride, itaconic acid, citraconic acid, etc.

Of these maleic anhydride and fumaric acid are preferred. Typical saturated polycarboxylic acids include dicarboxylic acids, such as phthalic acid, isophthalic acid, succinic acid, adipic acid, suberic acid, sebacic acid, azelaic acid, etc. Typical polyhydric alcohols include glycols, such as ethylene glycol, diethylene glycol, triethylene glycol, tetraethylene glycol, propylene glycol, dipropylene glycol and hexylene glycol; triols, such as glycerin, trimethylol ethane, trimethylol propane and hexane triol; pentaerythitol; etc.

The ethylenically unsaturated polyester is usually a flexible polyester or a semi-rigid polyester although mixtures of these may be used with rigid polyesters. Flexible polyesters form copolymerizates with vinylidene monomers (preferably styrene) having an elastic modulus of from about 10 to about 10,000 p.s.i. while semi-rigid polyesters form copolymers having an elastic modulus of from about 10,000 to 150,000 p.s.i. In addition, rigid polyesters, which form copolymerizates having an elastic modulus of from about 150,000 to 600,000 p.s.i. can be used in addition to the flexible and semi-rigid polyesters. Generally, the nonrigid polyesters contain from about 95-50 mole percent saturated dicarboxylic acid and correspondingly 5-50 mole percent alpha, beta-ethylenically unsaturated dicarboxylic acid, while the polyhydroxy component is principally a glycol. Usually the longer the chain length of the glycols or saturated dicarboxylic acid components making up the polyester the more flexible the polyester. Aromatic components (which are considered saturated materials in polyester resins), particularly phthalic acid, are not as effective as long chain saturated aliphatics in lowering the elastic modulus of a copolymer. However, the low cost of phthalic acid usually makes it a desirable component.

The ethylenically unsaturated polyesters comprise from about 30 to 80 weight percent of the in situ polymerizable resin-forming components. The remaining 70 to 20 weight percent of the in situ polymerizable resin-forming ingredients comprises a cross-linking vinylidene monomer selected from vinyl aromatics, such as vinyl toluene, styrene, alpha-methyl styrene, divinyl benzene, dichlorostyrene, alkyl esters of alpha, beta-ethylenically unsaturated monocarboxylic acids, such as methyl methacrylate, methyl acrylate, ethyl acrylate and 2-ethylhexyl acrylate, vinyl esters such as vinyl acetate and pripionate. The preferred vinylidene monomers are styrene and vinyl toluene. If desired, various other difunctional materials such as diallyl phthalate and trialkyl cyanimate can be added to the composition.

Peroxides constitute the principal group of initiators with diacyl peroxides fitting into one class and peroxyesters and ketone peroxides in the second class. Diacyl peroxides are normally used with amines and mercaptans as accelerators, while metal salts are used with the peroxyesters and ketone peroxides. Examples of diacyl peroxides include 2,4-dichlorobenzoyl peroxide, benzoyl peroxide, diisobutyryl peroxide, diisononanoyl peroxide, decanoyl peroxide, lauroyl peroxide, acetyl peroxide and succinic acid peroxide. Representative peroxyesters include t-butyl peroxybenzoate, t-butyl peroxyacetate, t-butyl peroxyisobutyrate, t-butyl-peroxy-2-ethylhexanoate, t-butyl peroxypivalate, t-butyl peroxyneodecanoate, t-butyl peroxymaleic acid, di-t-butyl diperoxyphthalate, 00-t-butyl-0-isopropyl monoperoxycarbonate, 2,5-dimethyl-2,5-bis(2-ethylhexanoylperoxy) hexane, and 2,5-dimethyl-2,5-bis(benzoylperoxy)hexane. Ketone peroxides include methyl ethyl ketone peroxide, hydroxyheptyl peroxide, and 2,4-pentanedione peroxide.

Representative compounds which supply the metal ions include salts and acetylacetonates of potassium, cobalt, copper, vanadium, manganese and lead. These accelerators should be soluble in the polyester mixture with common commercial products being octoates and naphthenates.

Suitable amine accelerators include dimethyl aniline, diethyl anilines and dimethyl-p-toluidine. Sulfur compounds suitable as accelerators include dodecyl mercaptan and mercaptoethanol.

A substantially unlimited number of possible combinations are possible using the Component A/Component B system. The amounts of initiator and accelerator can be varied in accordance with the prior art. Adjustment of the quantities and relative activity of the various combinations permits many variations in operations. The formulations are generally made permitting application of substantially equal amounts by weight of the two resin mixtures. However, these ratios can be varied and suitable operation is obtained using, for instance, 10 to 90% of Component A with 90 to 10% of Component B. Further, the system is not limited to the use of only two components and three or more initiated and accelerated PE compositions could be applied wherein the initiator and accelerator vary in the different compositions.

These compositions can also be blended with one or more fillers such as silica flour, barium sulfate, calcium carbonate, clay, sand, Cab-O-Sil, etc.

While various particulate materials can be used in producing the tube, and those suggested in the art are suitable, for cost reasons, sand is the preferred material. In the examples, reference is made to coarse and medium sand. In this sense, the coarse sand was, in fact, a 50-50 mixture of medium and coarse sand. Coarse sand is generally considered to be sand which passes Sieve No. 8 (opening 2.38 MM), but is retained on Sieve No. 30 (opening 0.595 MM) and medium sand is sand which passes Sieve No. 20 (0.841 MM), but is retained on Sieve No. 70 (0.210 MM).

In the examples, the base resin was Ashland 6592 which is the condensation product of isophthalic acid and a proprietary mixture of glycols to provide a degree of flexibility diluted with approximately 35 per cent by weight of styrene.

Using this base resin in equal amounts, two components, designated A and B, shown in the following table, were prepared with the initiator-accelerator systems shown in weight per cent.

| Component A | Wt.% |
|---|---|
| Benzoyl peroxide[1] | 4 |
| Cobalt Hex-cem[2] | 0.4 |
| Potassium Hex-cem[2] | 0.4 |
| **Component B** | |
| N,N-Dimethyl-p-toluidene | 0.5 |
| Lupersol DDM[3] | 0.5 |
| Lupersol 256[4] | 0.5 |

[1]   50% Benzoyl peroxide with phlegmatizer

[2]   Proprietary organic salts sold as accelerators by Mooney Chemicals, Inc.

[3]   60% Methyl ethyl ketone peroxide in dimethyl phthalate

[4]   2,5-Dimethyl-2,5-bis(2-ethylhexanoylperoxy)hexane

For resin supply to the mandrel in the examples, the pump used was a Binks Formulator "C." This unit has an eight-inch diameter air motor driving two fluid sections simultaneously. This results in an air to fluid pressure ratio of 1 psi air to 17.5 psi fluid pressure. The resin was delivered through an automatic airless Maverick Gun (Model 102-3350) which was controlled by valved air pressure.

The following examples set forth preferred systems using our invention, but they should be considered as illustrative and not as unduly limiting.

## EXAMPLE 1

This example illustrates the production of the sand resin tube. A 12-inch diameter mandrel was the spray target with the spray gun mounted on a moving carriage. The carriage advanced six inches per mandrel revolution, and the sand supply system, likewise traversing, covered the six-inch band of resin. An excess of sand was used with some being thrown off and recovered. The building sequence for the system was: resin spray (S), medium sand drop (M), resin spray, coarse sand drop (C), resin spray, medium sand, resin spray, coarse sand, resin spray, and medium sand. Thus, there were five spray passes, three medium sand passes, and two coarse sand passes. As previously stated, the coarse sand was a 50/50 volume mix of medium and coarse sand. The mandrel face speed was determined with a surface speed tachometer, and the resin flow was by direct measurement of flow through the tip. From this information, the resin coverage in pounds per square foot can be determined per spray pass. The resultant burn-off of the tube yields very consistent values for sand content, about 82 per cent. The details of these runs are shown in the following two tables.

### TABLE 1

| Run No. | Fluid Pressure psi | Mandrel Face Speed ft/min | Resin Flow Rate #/min. | Resin Coverage per pass #/ft$^2$ |
|---|---|---|---|---|
| 1 | 1522 | 110 | 4.32 | 0.0786 |
| 2 | 1522 | 148 | 4.32 | 0.0584 |
| 3 | 1225 | 110 | 3.75 | 0.0682 |
| 4 | 1225 | 148 | 3.75 | 0.0507 |
| 5 | 1085 | 200 | 5.02 | 0.0502 |
| 6 | 1085 | 110 | 3.612 | 0.06567 |
| 7 | 1085 | 110 | 5.02 | 0.0909 |

### TABLE 2

| Run No. | Burn Off Weight % Sand | Resin | Core Thickness T |
|---|---|---|---|
| 1 | 81.5% | 18.5% | 0.1935 |
| 2 | 83.2% | 16.8% | 0.1400 |
| 3 | 82.7% | 17.3% | 0.1700 |
| 4 | 83% | 17% | 0.1268 |

| Run No. | Burn Off Weight % | | Core Thickness T |
|---|---|---|---|
| | Sand | Resin | |
| 5 | 83% | 17% | 0.1246 |
| 6 | 82.4% | 17.6% | 0.1540 |
| 7 | 81.7% | 18.3% | 0.1972 |

## EXAMPLE 2

This example illustrates the production of sewer pipe containing the resin sand mixture described above and inner and outer glass filament reinforcing layers bonded by unsaturated polyester resins. A series of five pipes were made. Pipe No. 1 was an unlined 12-inch diameter pipe with the following winding sequence: hoop roving, tape (a tape containing longitudinal strips of glass fiber to provide bending resistance), hoop roving, sand core, hoop roving, tape, hoop, coarse sand. Sand core had the following sequence: medium sand, resin spray, medium sand, resin spray, medium sand, resin spray, coarse sand, resin spray, medium sand, resin spray, medium sand, resin spray, and medium sand. With the resin system described above, this pipe was exothermy as it left the winding station. The second pipe obtained a C-veil (resin carrier-needle bonded glass fiber) impregnated with a resin to provide a desired liner surface. The inside glass roving skin was composed of hoop roving, tape, hoop roving with the same resin. The sand core was made using the Component A/Component B system described above in the following layer sequence: medium sand, resin spray, coarse sand, resin spray, medium sand, resin spray, coarse sand, resin spray, and medium sand. The outside skin was the same as the inside, and the pipe was finished with a layer of coarse sand. Pipes 3 and 4 contained a corrosion resistant liner and were identical, except Pipe 3 had three coarse sand passes while Pipe 4 had three medium sand passes. Pipe No. 5 with a 24-inch diameter pipe with the following construction: hoop, tape, hoop, medium sand, resin spray, coarse sand, resin spray, medium sand, resin spray, coarse sand, resin spray, medium sand, hoop, tape, hoop, coarse sand.

Further details of Pipes 1 through 5 are shown in Tables 3, 4, 5, and 6 which follow.

## TABLE 3

### Structure

| Pipe | Liner | Inside Skin | Core | Outside Skin |
|------|-------|-------------|------|--------------|
| 1 | None | H,T,H,H | MS,SP,MS,SP,MS, SP,CS,SP,MS,SP, MS,SP,MS | H,T,H,H,CS |
| 2 | 1 C-Veil | H,T,H | MS,SP,CS,SP,MS, SP,CS,SP,MS | H,T,H,CS |
| 3 | 2 C-Veil | H,T,H | CS,SP,CS,SP, CS | H,T,H,CS |
| 4 | 2 C-Veil | H,T,H | MS,SP,MS,SP,MS | H,T,H,CS |
| 5 | 2 C-Veil | H,T,H | MS,SP,CS,SP, MS,SP,CS,SP,MS | H,T,H,CS |

H = Hoop, T = Tape, MS = Medium Sand, CS = Coarse Sand, SP = Resin Spray, V = Veil

## TABLE 4

| | | | Thickness (in.) | | | | |
|------|------------|-------------------------|-------|---------------|------|------------------------|---------|
| Pipe | Dia. (in.) | Weight per ft. (lbs) | Liner | Inside Skin | Core | Out- Side Skin | Total[1] |
| 1 | 12 | 9.8 | None | 0.060 | 0.193 | 0.060 | 0.353 |
| 2 | 12 | 8.3 | 0.015 | 0.035 | 0.176 | 0.035 | 0.278 |
| 3 | 12 | 7.3 | 0.047 | 0.035 | 0.124 | 0.035 | 0.284 |
| 4 | 12 | 5.9 | 0.048 | 0.035 | 0.077 | 0.035 | 0.229 |
| 5 | 24 | 19.2 | 0.047 | 0.035 | 0.180 | 0.035 | 0.337 |

Note: [1]Thickness includes 0.040 inches O.D. coarse sand.

TABLE 5

| Pipe | Gross Density $\#/in^3$ | EI Pounds Load @ 5% Deflection | Maximum Deflection @ Failure |
|---|---|---|---|
| 1 | 0.061 | 1345 | 21% |
| 2 | 0.067 | 515 | 22% |
| 3 | 0.057 | 310 | 34% |
| 4 | 0.057 | 182 | 50% |
| 5 | 0.063 | 200 | 22% |

TABLE 6

Burn-Off Weight %

| Pipe | Whole Pipe Wall | | | Core Area Only | |
|---|---|---|---|---|---|
| | Sand | Resin | Glass | Sand | Resin |
| 1 | 47% | 33% | 19% | 72% | 28% |
| 2 | 59% | 26% | 12% | 78% | 22% |
| 3 | 48% | 34% | 14% | 79% | 21% |
| 4 | 41% | 37% | 21% | 72% | 28% |
| 5 | 52% | 34% | 12% | 76% | 24% |

In the production of pipe as shown in Example 2, it is frequently desirable to provide an additional resin spray over the last core sand application to control porosity before the reinforced skin is applied.

Considerable variation is possible in the sand resin proportions in the core. Good pipe can be obtained containing 50 to 93 weight per cent sand, and 50 to 7 weight per cent resin. Our work has shown that a preferred range comprises 78 to 86 weight per cent sand, and 22 to 14 per cent resin.

To design a pipe, it is possible to assume that the coarse sand adds approximately 0.065 inches per pass, and medium sand will provide increased thickness of 0.020 per cent per pass.

We prefer to use a mandrel speed of approximately 165 feet per minute, but a range of 100 to 200 feet per minute is quite operable. In our system, sand feed rates run approximately 60 pounds per minute delivered to approximately top dead center on the mandrel. This will vary according to the apparatus used. In any event, an excess of sand is used to be sure to provide the full amount necessary to be incorporated in the resin.

For best results, the target gel time of the resin should range between 45 and 150 seconds, the longer gel times being used for larger diameter products. Gel time can be varied by adjusting the quantity of N,N,-dimethyl-p-toluidine. A small change in the amount of this promoter causes a large change in gel time. The amount of N,N,-dimethyl-p-toluidine can range from 0.2 to 0.3 parts by weight of the resin component in which it is used.

The simple sand resin tubes are useful for conveying highly abrasive mixtures such as fly ash. The product gives good resistance to corrosion and abrasion, a serious problem with such streams.

The pipes shown in Example 2 are useful for sewer and low pressure application. By increasing the inner and outer glass reinforced layers, pressure pipe can be made.

While we have described our invention in considerable detail, it should be noted that considerable variation and departure from these details will be apparent to those skilled in the art without departing from the broad scope of the invention.

CLAIMS

1. A method for producing a tube containing particulate material bonded by a thermosetting resin comprising rotating a mandrel, spraying progressively along the length of the mandrel from the first to the second end a band of resin onto said mandrel, dropping particulate material on said band of resin at a point spaced from the point of application of the band of resin, reversing relative movement between (1) said mandrel and (2) said resin band and particulate material application so as to apply resin and particulate material progressively from the second to the first end of the mandrel, and continuing said spraying and dropping until a predetermined thickness of particulate material and resin is obtained.

2. The method of claim 1 wherein said resin is an unsaturated polyester.

3. The method of claim 1 wherein said resin is an epoxy resin.

4. The method of claim 1 wherein said particulate material is sand.

5. A method for producing a tube containing particulate material bonded by unsaturated polyester or epoxy resin comprising rotating a mandrel adapoted to traverse a fixed location while said mandrel is rotating and traversing, spraying a band of resin onto said mandrel from said fixed location, dropping particulate material onto the mandrel covering the band of said sprayed resin, said spraying taking place at a location around said mandrel other than the location where said particulate material is dropped and being contiguous to the adjacent band of sprayed resin, and continuing said spraying and dropping until a predetermined thickness of particulate material and resin is obtained.

6. The method of claim 5 wherein said particulate material is sand.

7. The method of claim 6 wherein said tube contains, on a weight basis, 78 to 86 per cent sand and 22 to 14 per cent resin.

8. The method of claim 6 wherein a layer of resin bonded reinforcing fibers or filaments are applied to the mandrel around the axis thereof prior to the application of sand and resin and a second layer of continuous glass roving is applied to the sand-resin layer after said predetermined thickness is obtained.

9.    Apparatus for building a particulate material/ resin tubular wall structure comprising a rotatable mandrel, means to rotate said mandrel, means to drop particulate material on a selected portion of the top portion of said mandrel, means to apply a band of liquid to said mandrel at a location spaced from but in constant relative position to said means to drop particulate material, and means to provide relative longitudinal traverse of (1) said mandrel and (2) the combination of said means to drop particulate material and said means to apply a band of liquid.

10.    The apparatus of claim 9 wherein said particulate material is sand.

11.    The apparatus of claim 10 wherein said means to drop sand and said means to apply a band of liquid are fixed and said mandrel is longitudinally traversable.

12.    The apparatus of claim 10 wherein said mandrel is rotated in a fixed position and said combination of said means to drop sand and said means to apply a band of resin are adapted to traverse said mandrel.

13.    The apparatus of claim 9 further comprising means to supply resin impregnated fiberglass tape or roving to said mandrel.

14. Tube produced by the method of claim 1.

15. Tube produced by the method of claim 5.

FIG. 1

FIG. 2